# EUROPEAN PATENT APPLICATION

(11) **EP 4 707 998 A1**
(43) Date of publication of application: **11.03.2026**
(21) Application number: 25193289.3
(22) Date of filing: 26.08.2024
(51) Int. Cl.: G06F 3/01, H04N 13/111, H04N 13/344

(54) **XR STREAMING METHOD AND XR PROJECTION SYSTEM**

(62) Divisional of application: 24196536.7
(71) Applicant: Holo-Light GmbH, 6020 Innsbruck (AT)
(72) Inventor: Landgraf, Philipp, 6020 Innsbruck (AT); Werlberger, Alexander, 6020 Innsbruck (AT); Howie, Aidan, 6020 Innsbruck (AT)
(74) Representative: Prinz & Partner mbB

(57) **Abstract**

An extended reality, XR, streaming method of streaming XR images from an XR application instance (26) to an XR device (12) is described. The XR application instance (26) is integrated into a computer device (14) that is provided separately from the XR device (12). The XR streaming method comprises the steps of
- rendering, by the XR application instance (26), an XR image to be displayed on the XR device (12) with respect to a predetermined reference position, wherein the predetermined reference position has a predetermined relation to a momentary position of the XR device (12);
- streaming, by the XR application instance (26), the rendered XR image to the XR device (12); and
- reprojecting, by the XR device (12), the rendered XR image to a first eye position and/or reprojecting, by the XR device (12), the rendered XR image to a second eye position, such that a first XR image for the first eye and a second XR image for the second eye are obtained based on the rendered XR image.

Further, an XR projection system (10) is described.

## Description

The present invention generally relates to an XR streaming method of streaming XR images from an XR application instance to an XR device. The present invention further relates to an XR projection system.

Certain types of extended reality applications require two images in order to enable a realistic 3D experience to a user, namely a first image for the left eye of the user and a second image for the right eye of the user.

As rendering these images is computationally expensive, the images may be rendered by an external computer device and may then be streamed to the an XR device of the user.

However, due to two images being sent for each frame, the necessary streaming bandwidth is rather large.

The object of the present invention is to provide an XR streaming method and an XR projection system that require less streaming bandwidth.

According to the present invention, the problem is solved by an extended reality, XR, streaming method of streaming XR images from an XR application instance to an XR device. The XR application instance is integrated into a computer device that is provided separately from the XR device. The XR streaming method comprises the steps of
- rendering, by the XR application instance, an XR image to be displayed on the XR device with respect to a predetermined reference position, wherein the predetermined reference position has a predetermined relation to a momentary position of the XR device;
- streaming, by the XR application instance, the rendered XR image to the XR device; and
- reprojecting, by the XR device, the rendered XR image to a first eye position and/or reprojecting, by the XR device, the rendered XR image to a second eye position, such that a first XR image for the first eye and a second XR image for the second eye are obtained based on the rendered XR image.

Therein and in the following, the term "position" is understood to denote a location and/or orientation.

Accordingly, the term "first eye position" relates to the location and/or to the orientation of a first eye of the user, etc.

The term "XR device" is understood to denote an electronic device that is configured to display an extended reality (XR) image, i.e. an augmented reality (AR) image, a mixed reality (MR) image, and/or a virtual reality (VR) image.

For example, the XR device may be a head-mounted display, e.g. an electronic wearable having the shape of glasses. However, it is to be understood that the XR device may be established as any other XR-capable electronic device, e.g. as a smartphone or as a tablet.

Moreover, the term "XR image" is understood to denote at least one virtual image.

In the case of augmented reality or mixed reality, the XR image corresponds to at least one virtual image that is superimposed over reality.

For example, the XR device may be a head-mounted display with a semi-transparent display, wherein the virtual image is displayed on the semi-transparent display, such that the user can directly see the environment through the semi-transparent display, but with the virtual image superimposed.

As another example, the XR device may be a head-mounted display that is optically opaque. In this case, the head-mounted display may comprise at least one internal camera, particularly several internal cameras being configured to capture images of the environment of the head-mounted display. The real images captured by means of the internal camera are superimposed with the virtual image(s), and the resulting superposition of the real image(s) and the augmented reality image(s) is displayed on a display of the head-mounted display.

As another example, the XR device may be a smartphone or a tablet, wherein an image captured by means of a camera of the XR device is superimposed with the at least one virtual image, and the resulting image is displayed on a display.

In the case of virtual reality, the XR image corresponds to a virtual image being displayed on a display of the XR device.

For example, the XR device may be a head-mounted display that is optically opaque. The VR images may be displayed on a display of the head-mounted display.

The XR streaming method according to the present invention is based on the idea to employ reprojection techniques in order to conserve streaming bandwidth.

Instead of rendering XR images for both eyes for each frame and streaming both images to the XR device, only a single XR image is rendered per frame and transmitted to the XR device.

Based on this single XR image, the first XR image for the first eye and/or the second XR image for the second eye are obtained by reprojecting the streamed XR image.

In general, the predetermined reference position is an arbitrary position having a fixed relation to the momentary position of the XR device.

As will be described in more detail below, the rendered XR image may correspond to the first eye position or to the second eye position. In this case, the rendered XR image may be reprojected only to the second eye position or to the first eye position, respectively.

Alternatively, the rendered XR image may correspond to a position that is different from both the first eye position and the second eye position. In this case, the rendered XR image may be reprojected to both the first eye position and the second eye position.

For example, the predetermined reference position may be an average of the first eye position and of the second eye position.

With the XR streaming method according to the present invention, the necessary streaming bandwidth can be reduced significantly, namely by up to 50%.

It is noted that the rendered XR image received by the XR device may further be reprojected based on an updated position of the XR device, which may differ from the momentary position of the XR device that the XR image has been rendered for. Therein, any suitable reprojection technique may be employed, e.g. machine-learning based reprojection and/or algorithm-based reprojection techniques.

In other words, the first XR image and the second XR image may be reprojected based on the updated position of the XR device, such that movements of the XR device and/or of the user are taken into account.

This allows to provide stable, world-anchored holograms even for large differences between the momentary position of the XR device and the updated position of the XR device at the time at which the at least XR image is to be displayed. For example, such large position differences may arise when the user's head moves quickly.

Further, the reprojection method according to the present invention provides stable, world-anchored holograms even for large latencies, e.g. for latencies over 100 ms, which are a further possible cause for large differences between the momentary position at the time of rendering and the position of the XR device at the time at which the at least one XR image is to be displayed.

It is noted that the steps of the method described above relate to a single frame. Of course, these steps may be carried out repeatedly, such that a stream of consecutive XR images to the XR device is obtained.

According to an aspect of the present invention, the predetermined reference position is a momentary position of the first eye or a momentary position of the second eye. Accordingly, the rendered XR image may correspond to the first XR image or to the second XR image. The second XR image or the first XR image is obtained by reprojecting the rendered XR image from the first eye position to the second eye position or from the second eye position to the first eye position, respectively.

Thus, for one of the first eye position and the second eye position, the rendered XR image may only be reprojected based on an updated first eye position or an updated second eye position in order to account for a movement of the user and/or of the XR device, which leads to a particularly high quality of the reprojected XR image.

In an embodiment of the present invention, the predetermined reference position alternates between the momentary position of the first eye and the momentary position of the second eye. In fact, the predetermined reference position may correspond to the momentary first eye position for a certain number of frames. Then, the reference position is adapted to the momentary second eye position for a certain number of frames, etc.

According to another aspect of the present invention, the predetermined reference position alternates between the momentary position of the first eye and the momentary position of the second eye for each consecutively rendered XR image. In other words, the predetermined reference position may alternate between the momentary first eye position and the momentary second eye position of the second eye for each consecutive frame.

Accordingly, the XR image may be rendered for each of the momentary first eye position and the momentary second eye position with half of the framerate of the XR device, wherein the predetermined reference position for rendering the XR image alternates between the momentary first eye position and the momentary second eye position.

In fact, the first XR image for the first eye may be obtained based on the previous rendered XR image if the current rendered XR image corresponds to the second eye position, wherein the second XR image for the second eye is obtained based on the previous rendered XR image if the current rendered XR image corresponds to the first eye position.

Accordingly, in each frame, the rendered XR image corresponds to either the first eye position or to the second eye position, such that the rendered XR image does not necessarily have to be reprojected in the current frame in order to obtain the first XR image or the second XR image, respectively (i.e. up to a reprojection accounting for an updated position of the first eye or of the second eye).

In fact, the second XR image or the first XR image, i.e. the XR image that the rendered XR image received in the current frame does not correspond to, may be obtained by reprojecting the rendered XR image received by the XR device in the previous frame, which has corresponded to the second eye position or to the first eye position.

Alternatively, the second XR image or the first XR image, i.e. the XR image that the rendered XR image received in the current frame does not correspond to, may be obtained by reprojecting the rendered XR image received in the current frame to the second eye position or the first eye position, respectively. Optionally, the reprojected XR image may be corrected based on the rendered XR image received in the previous frame.

In general, this leads to an enhanced image quality of the first XR image and/or of the second XR image.

Another aspect of the present invention provides that the predetermined reference position is equal to the first eye position or the second eye position, wherein the XR streaming method further comprises the steps of
- rendering, by the XR application instance, the XR image to be displayed for the second eye position or the first eye position, thereby obtaining a comparison XR image;
- reprojecting, by the XR application instance, the rendered XR image to the second eye position or to the first eye position, thereby obtaining a reprojected XR image;
- comparing, by the XR application instance, the reprojected XR image with the comparison XR image, thereby obtaining difference data; and
- transmitting, by the XR application instance, the difference data to the XR device.

In other words, the reprojection that is to be performed by the XR device may also be performed by the XR application instance that is integrated into the external computer device, thereby obtaining the comparison XR image. In fact, the XR application instance may employ the same reprojection technique as the XR device.

The reprojected image is compared with the actual rendered image for that position, namely the comparison XR image, such that the difference data is indicative of errors introduced into the reprojected XR image by the reprojection. As the XR application instance and the XR device may employ the same reprojection technique, the difference data likewise describes the expected errors caused by the reprojection performed by the XR device.

The rendered XR image streamed to the XR device may alternate between the first eye position and the second eye position as described above. The reprojection performed by the XR application instance may accordingly alternate between from the first eye position to the second position and from the second eye position to the first eye position.

In general, the difference data requires considerably less streaming bandwidth than a full XR image. Thus, in spite of transmitting the difference data to the XR device, the required streaming bandwidth is significantly reduced compared to streaming two rendered XR images to the XR device.

Further, the image quality of the XR image obtained by the XR device based on a reprojection can be enhanced significantly based on the difference data.

The second XR image for the second eye obtained by the XR device may be corrected by the XR device based on the difference data, or the first XR image for the first eye obtained by the XR device may be corrected by the XR device based on the difference data. In other words, the XR image obtained by the XR device based on a reprojection may be corrected based on the difference data.

Accordingly, the image quality of the XR image obtained by reprojection is enhanced based on the difference data.

According to an aspect of the present invention, the difference data is encoded by the XR application instance before transmission to the XR device. This way, the streaming bandwidth necessary for transmitting the difference data can be reduced even further.

The XR device may decode the encoded difference data, thereby recovering the difference data.

In an embodiment of the present invention, the predetermined reference position is different from the first eye position and different from the second eye position. The XR streaming method may further comprise the steps of
- rendering, by the XR application instance, the XR image to be displayed for the first eye position, thereby obtaining a first comparison XR image;
- rendering, by the XR application instance, the XR image to be displayed for the second eye position, thereby obtaining a second comparison XR image;
- reprojecting, by the XR application instance, the rendered XR image to the first eye position, thereby obtaining a first reprojected XR image;
- reprojecting, by the XR application instance, the rendered XR image to the second eye position, thereby obtaining a second reprojected XR image;
- comparing, by the XR application instance, the first reprojected XR image with the first comparison XR image, thereby obtaining first difference data;
- comparing, by the XR application instance, the second reprojected XR image with the second comparison XR image, thereby obtaining second difference data; and
- transmitting, by the XR application instance, the difference data to the XR device.

Therein, the term "the difference" data is understood to denote both the first difference data and the second difference data.

In other words, the reprojection that is to be performed by the XR device may also be performed by the XR application instance that is integrated into the external computer device. In fact, the XR application instance may employ the same reprojection technique as the XR device.

The reprojected images are compared with the respective actual rendered image for the respective position, i.e. with the first comparison image and the second comparison image, such that the difference data is indicative of errors introduced into the respective XR image by the reprojection.

The difference data requires considerably less streaming bandwidth than a full XR image. Thus, in spite of transmitting the difference data to the XR device, the required streaming bandwidth is significantly reduced compared to streaming two rendered XR images to the XR device.

Further, the image quality of the XR images obtained by the XR device based on a reprojection can be enhanced significantly based on the difference data.

In a further embodiment of the present invention, the first XR image for the first eye obtained by the XR device is corrected by the XR device based on the first difference data, and/or wherein the second XR image for the second eye obtained by the XR device is corrected by the XR device based on the second difference data. In other words, the XR images obtained by the XR device based on a reprojection may be corrected based on the difference data.

Accordingly, the image quality of the XR images obtained by reprojection is enhanced based on the difference data.

The first difference data may be encoded by the XR application instance before transmission to the XR device. Alternatively or additionally, the second difference data may be encoded by the XR application instance before transmission to the XR device. This way, the streaming bandwidth necessary for transmitting the difference data can be reduced even further.

The XR device may decode the encoded difference data, thereby recovering the difference data, more precisely the first difference data and the second difference data.

In an embodiment of the present invention, the XR application instance and the XR device employ the same reprojection algorithm and/or the same machine-learning model trained to perform the reprojection. Thus, it is ensured that the difference data accurately represents errors of the reprojection performed by the XR device. Accordingly, it is ensured that these errors can be corrected reliably based on the difference data.

According to another aspect of the present invention, the rendered XR image is reprojected based on an updated position of the XR device. More precisely, the updated position of the XR device may be taken into account for obtaining the first XR image and the second XR image.

The updated position may differ from the momentary position of the XR device that the XR image has been rendered for due to a movement of the user and/or a movement of the XR device. This difference is accounted for by the reprojection performed by the XR device.

According to the present invention, the problem further is solved by an XR projection system. The XR projection system comprises an XR device and an XR application instance. The XR application instance is integrated into a computer device that is provided separately from the XR device. The XR projection system is configured to perform the XR streaming method according to any one of the variants described above.

Regarding the advantages and further properties of the XR projection system, reference is made to the explanations given above with respect to the XR streaming method, which also hold for the XR projection system and vice versa.

According to an aspect of the present invention, the computer device is or comprises at least one server. Particularly, the computer device may be or comprise a server cloud having several servers that cooperate in providing an XR streaming service.

However, it is to be understood that the computer device may be established as or comprise any other suitable type of computer device, such as a personal computer, as a laptop, as a notebook, as a MAC, as a tablet, as a smartphone, or as any other type of smart device.

The foregoing aspects and many of the attendant advantages of the claimed subject matter will become more readily appreciated as the same become better understood by reference to the following detailed description, when taken in conjunction with the accompanying drawings, wherein:
- Figure 1 schematically shows an XR projection system according to the present invention;
- Figure 2 schematically shows an exemplary embodiment of the XR projection system of Figure 1;
- Figure 3 shows a flow chart of an XR streaming method according to the present invention.

The detailed description set forth below in connection with the appended drawings, where like numerals reference like elements, is intended as a description of various embodiments of the disclosed subject matter and is not intended to represent the only embodiments. Each embodiment described in this disclosure is provided merely as an example or illustration and should not be construed as preferred or advantageous over other embodiments. The illustrative examples provided herein are not intended to be exhaustive or to limit the claimed subject matter to the precise forms disclosed.

For the purposes of the present disclosure, the phrase "at least one of A, B, and C", for example, means (A), (B), (C), (A and B), (A and C), (B and C), or (A, B, and C), including all further possible permutations when more than three elements are listed. In other words, the term "at least one of A and B" generally means "A and/or B", namely "A" alone, "B" alone or "A and B".

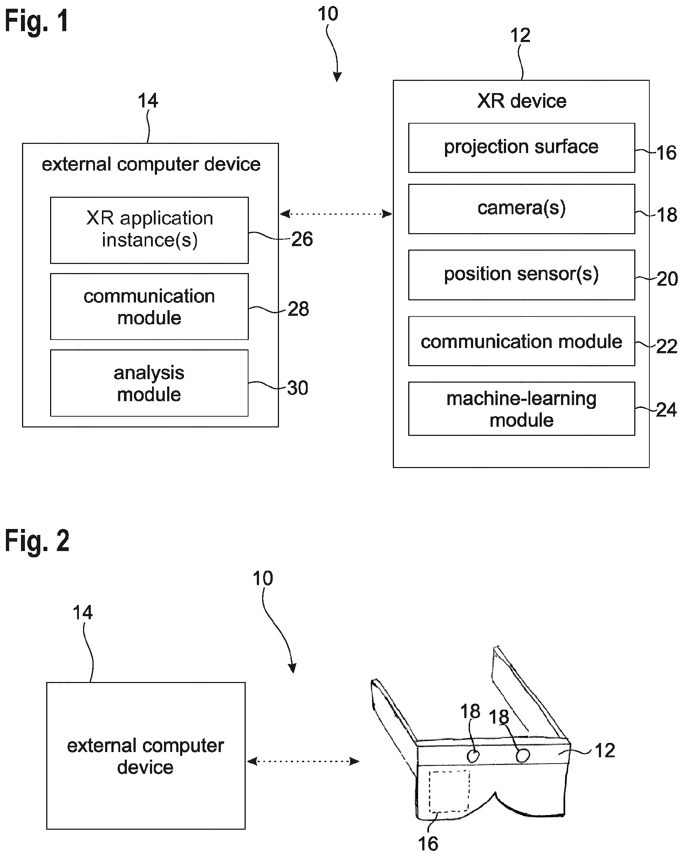

Figure 1 schematically shows a block diagram of an XR projection system 10 comprising an XR device 12 and an external computer device 14 being connected with the XR device 12 in a signal-transmitting manner.

Therein and in the following, the term "connected in a signal transmitting manner" is understood to denote a cable-based or wireless connection that is configured to transmit signals between the respective devices or components.

In general, the XR device 12 is an electronic device that is configured to display an extended reality (XR) image, i.e. an augmented reality (AR) image, a mixed reality (MR) image, and/or a virtual reality (VR) image.

As is illustrated in Figure 2, the XR device 12 may, for example, be configured as a head-mounted display, particularly as an electronic wearable having the shape of glasses.

However, it is to be understood that the XR device 12 may be established as any other XR-capable electronic device, e.g. as a smartphone or as a tablet.

In general, the XR projection system 10 allows a user to observe and/or interact with virtual objects, particularly virtual 3D objects.

If the XR projection system 10 is an AR projection system or an MR projection system, these virtual objects are embedded into a real environment of the user.

Accordingly, the XR device 12 comprises at least one projection surface 16, wherein at least XR image to be displayed is projected onto the projection surface 16, such that the virtual object is displayed to the user.

The projection surface 16 may be a display of the XR device 12.

Optionally, the XR projection system 10 may comprise at least one handheld input device (not shown in Figure 1), wherein the user may control the XR projection system 10 by means of the at least one handheld input device.

For example, the at least one handheld input device may be established as a pen-shaped device or as any other type of suitable input device.

The XR device 12 further comprises at least one camera 18, at least one position sensor 20, a communication module 22, and a machine-learning module 24.

Therein and in the following, the term "module" is understood to describe suitable hardware, suitable software, or a combination of hardware and software that is configured to have a certain functionality.

The hardware may, inter alia, comprise a CPU, a GPU, an FPGA, an ASIC, or other types of electronic circuitry.

The at least one camera 18 is configured to capture images of an environment of the XR device 12, particularly of an environment in front of the XR device 12.

Particularly, the at least one camera 18 may be established as a stereo camera. Alternatively or additionally, the XR device 12 may comprise several cameras with overlapping field of view. Thus, depth-information on images taken by the at least one camera 18 can be determined based on images taken by the at least one camera 18.

The at least one position sensor 20 is configured to determine a position, i.e. a location and/or orientation of the XR device 12.

For example, the at least one position sensor 20 may be established as a gyroscope, as an acceleration sensor, as a magnetometer, as a GNSS device, and/or as any other suitable type of position sensor.

In general, the external computer device 14 may be established as any type of electronic computing device that is configured to have the functionality described below.

For example, the external computer device 14 may be established as a server with suitable hardware and with suitable software being executed on the hardware.

As another example, the external computer device 14 may be established as a personal computer, as a laptop, as a notebook, as a MAC, as a tablet, as a smartphone, or as any other type of smart device.

The external computer device 14 comprises at least one XR application instance 26, and a communication module 28.

Optionally, the external computer device 14 comprises an analysis module 30.

The functionality of the individual modules will be described in more detail below.

The communication module 22 of the XR device 12 and the communication module 28 of the external computer device 14 are configured to communicate with each other.

In fact, image data, position data and/or control data may be exchanged between the XR device 12 and the external computer device 14 by means of the communication modules 22, 28.

Therein, any suitable wireless or cable-based transmission technique may be used by the communication modules 22, 28, e.g. WLAN, 4G, 5G, Ethernet, etc.

It is noted that the embodiment of the XR projection system 10 illustrated in Figures 1 and 2 is understood to be exemplary.

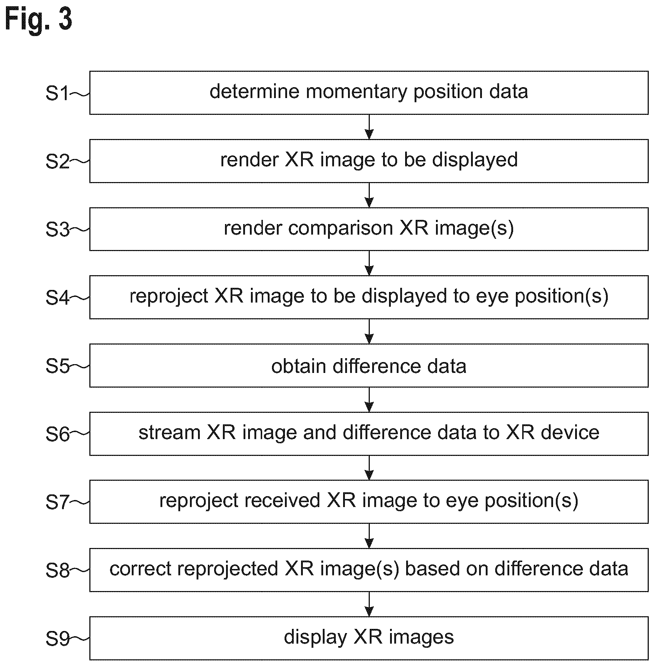

The XR projection system 10 is configured to perform an XR streaming method of streaming XR images from the at least one XR application instance 26 to the XR device 12, which is explained in the following with reference to Figure 3.

Momentary position data is determined, wherein the momentary position data is associated with a momentary position of the XR device 12 (step S1).

In general, the momentary position data comprises information on a momentary location of the XR device 12 and/or information on a momentary orientation of the XR device 12.

Preferably, the momentary position data comprises information on the momentary location of the XR device 12 and information on the momentary orientation of the XR device 12, as this uniquely determines the field of view of a user of the XR device 12 or of the XR device 12 itself.

In the exemplary embodiment shown in Figures 1 and 2, the momentary position data is determined by means of the at least one position sensor 20 of the XR device 12.

Alternatively or additionally, the momentary position data may be determined by means of at least one external camera, i.e. at least one camera that is not integrated into the XR device 12.

The at least one external camera may be connected to the analysis module 30, wherein the analysis module 30 is configured to determine the momentary position data based on images of the XR device 12 captured by means of the at least one external camera. The analysis module 30 may be integrated into the XR device 12 or into the external computer device 14.

Optionally, the XR device 12 may comprise one or several light-emitting elements, particularly one or several LEDs. The analysis module 30 may determine the momentary position data based on images of the one or several light-emitting elements captured by means of the at least one external camera, particularly via triangulation.

Further, it is also conceivable that the analysis module 30 may determine the momentary position data based on images captured by means of the at least one camera 18.

The momentary position data is transmitted to the at least one XR application instance 26 via the communication modules 22, 28.

An XR image to be displayed is rendered by the XR application instance 26 based on the momentary position data, wherein the XR image is rendered with respect to a predetermined reference position (step S2).

The XR image rendered with respect to the predetermined reference position is to be transmitted to the XR device 12, as will be described in more detail below.

The predetermined reference position has a predetermined relation to the momentary position of the XR device 12.

For example, the predetermined reference position may correspond to a first eye position, i.e. to the location and/or orientation of a first eye of the user.

As another example, the predetermined reference position may correspond to a second eye position, i.e. to the location and/or orientation of a second eye of the user.

In fact, the predetermined reference position may alternate between the first eye position and the second eye position for consecutively rendered XR images.

Particularly, the predetermined reference position may alternate between the momentary position of the first eye and the momentary position of the second eye for each consecutive frame.

As another example, the predetermined reference position may be different from both the first eye position and from the second eye position. In a particular example, the predetermined reference position may be an average of the first eye position and the second eye position.

However, it is to be understood that the predetermined reference position may be an arbitrary position having a fixed relation to the momentary position of the XR device 12.

Optionally, the XR image to be displayed on the XR device 12 may be rendered for both the first eye position and for the second eye position (step S3).

Accordingly, if the predetermined reference position corresponds to the first eye position, and the XR image to be transmitted to the XR device 12 is rendered for that first eye position, the XR image may additionally be rendered for the second eye position by the at least one XR application instance 26, thereby obtaining a second comparison XR image.

If the predetermined reference position corresponds to the second eye position, and the XR image to be transmitted to the XR device 12 is rendered for that second eye position, the XR image may additionally be rendered for the first eye position by the at least one XR application instance 26, thereby obtaining a first comparison XR image.

If the predetermined reference position corresponds to a position that is different from both the first eye position and the second eye position, the XR image may additionally be rendered for the first eye position and for the second eye position by the at least one XR application instance 26, thereby obtaining a first comparison XR image and a second comparison XR image.

The XR image rendered with respect to the predetermined reference position is reprojected by the at least one XR application instance 26 to the first eye position and/or to the second eye position (step S4).

More precisely, if the predetermined reference position corresponds to the first eye position, the XR image to be transmitted to the XR device 12 may be reprojected to the second eye position, thereby obtaining a second reprojected XR image.

If the predetermined reference position corresponds to the second eye position, the XR image to be transmitted to the XR device 12 may be reprojected to the first eye position, thereby obtaining a first reprojected XR image.

If the predetermined reference position corresponds to a position that is different from both the first eye position and the second eye position, the XR image to be transmitted to the XR device 12 may be reprojected to both the first eye position and the second eye position, thereby obtaining a first reprojected XR image and a second reprojected XR image.

The at least one comparison XR image obtained as described above may be compared with the corresponding reprojected XR image by the at least one XR application instance, thereby obtaining difference data (step S5).

More precisely, if the predetermined reference position corresponds to the first eye position, the difference data is obtained based on a comparison of the second reprojected XR image with the second comparison XR image.

If the predetermined reference position corresponds to the second eye position, the difference data is obtained based on a comparison of the first reprojected XR image with the first comparison XR image.

If the predetermined reference position corresponds to a position that is different from both the first eye position and the second eye position, the difference data comprises first difference data and second difference data. The first difference data is obtained based on a comparison of the first reprojected XR image with the first comparison XR image. The second difference data is obtained based on a comparison of the second reprojected XR image with the second comparison XR image.

The XR image rendered with respect to the predetermined reference position, and optionally the difference data, is streamed to the XR device 12 via the communication modules 28, 22 (step S6).

Therein, the XR image may be encoded before transmission to the XR device 12.

Optionally, the difference data may be encoded before transmission to the XR device 12.

It is noted that the XR image or rather the XR image data comprising the XR image transmitted to the XR device 12 may comprise information on a view matrix and/or a projection matrix.

As the XR image to be displayed may comprise virtual, world-anchored objects, particularly virtual 3D objects, the view matrix and/or the projection matrix comprise useful information for correctly displaying the XR image on the XR device 12.

The view matrix comprises all information necessary in order to transform objects from the world space to the view space, wherein the view space is associated with the XR device 12, particularly with the at least one camera 18 of the XR device 12. In the view space, the at least one camera 18 may rest at the origin, particularly wherein the main view direction of the at least one camera is along the z-axis.

Particularly, the view matrix may be determined based on a determined momentary position of the XR device 12 or of the at least one camera 18 of the XR device 12.

Likewise, the view matrix may be determined based on a determined updated position of the XR device 12 or of the at least one camera 18 of the XR device 12.

The projection matrix comprises all information necessary in order to project objects from the view space into the projection space, wherein the projection space is associated with the XR device 12, particularly with the at least one camera 18 of the XR device 12. In general, this projection of objects into the projection space allows to correctly display virtual (3D) objects on the XR device 12.

The received XR image is reprojected by the XR device 12 to the first eye position and/or to the second eye position, thereby obtaining a first XR image for the first eye and a second XR image for the second eye (step S7).

More precisely, the received XR image may be reprojected by the machine-learning module 24, which may comprise a machine-learning model that has been pre-trained to perform the reprojection.

However, it is to be understood that the reprojection may alternatively or additionally be performed based on a reprojection algorithm.

If the received XR image corresponds to the first eye position, the XR image received by the XR device 12 may be the first XR image. The received XR image is reprojected by the XR device 12 to the second eye position, thereby obtaining the second XR image.

If the received XR image corresponds to the second eye position, the XR image received by the XR device 12 may be the second XR image. The received XR image is reprojected by the XR device 12 to the first eye position, thereby obtaining the first XR image.

As already described above, the predetermined reference position may alternate between the first eye position and the second eye position. In this case, the first XR image for the first eye may be obtained based on the previous received XR image if the current received XR image corresponds to the second eye position. Likewise, the second XR image for the second eye may be obtained based on the previous received XR image if the current received XR image corresponds to the first eye position.

Accordingly, in each frame, the rendered XR image corresponds to the first eye position or the second eye position and does not have to be reprojected in order to obtain the first XR image or the second XR image, respectively (i.e. up to a reprojection accounting for an updated position of the first eye or of the second eye).

The second XR image or the first XR image may be obtained by reprojecting the rendered XR image received by the XR device in the previous frame, which has corresponded to the second eye position or to the first eye position.

Alternatively, the second XR image or the first XR image may be obtained by reprojecting the rendered XR image received in the current frame to the second eye position or the first eye position, respectively. Optionally, the reprojected XR image may be corrected based on the rendered XR image received in the previous frame.

If the received XR image corresponds to a position that is different from both the first eye position and the second eye position, The received XR image is reprojected by the XR device 12 to both the first eye position and the second eye position, thereby obtaining the first XR image and the second XR image, respectively.

Therein, the first eye position may be an updated position of the first eye, which may be determined based on an updated position of the XR device 12 at the time at which the XR image is to be displayed.

Likewise, the second eye position may be an updated position of the second eye, which may be determined based on an updated position of the XR device 12 at the time at which the XR image is to be displayed.

Accordingly, the reprojection of the XR image to the first eye position and/or the second eye position may take movements of the user or rather of the XR device 12 into account, such that the reprojected XR image(s) correspond to the updated first eye position and/or the updated second eye position.

The updated position of the XR device 12 may be determined by the position sensor(s) 20 or according to any of the other variants described above.

Optionally, the first XR image and/or the second XR image may be corrected by the XR device 12 based on the difference data received from the at least one XR application instance (step S8).

The first XR image and the second XR image are displayed by the XR device 12 (step S9).

In fact, the first XR image may be displayed on a portion of the projection surface 16 that is allocated to the first eye, while the second XR image may be displayed on a portion of the projection surface that is allocated to the second eye.

If the first XR image and/or the second XR image have been corrected based on the difference data, the corresponding corrected first XR image and/or the corrected second XR image may be displayed.

Certain embodiments disclosed herein, particularly the respective module(s) and/or unit(s), utilize circuitry (e.g., one or more circuits) in order to implement standards, protocols, methodologies or technologies disclosed herein, operably couple two or more components, generate information, process information, analyze information, generate signals, encode/decode signals, convert signals, transmit and/or receive signals, control other devices, etc. Circuitry of any type can be used.

In an embodiment, circuitry includes, among other things, one or more computing devices such as a processor (e.g., a microprocessor), a central processing unit (CPU), a digital signal processor (DSP), an application-specific integrated circuit (ASIC), a field-programmable gate array (FPGA), a system on a chip (SoC), or the like, or any combinations thereof, and can include discrete digital or analog circuit elements or electronics, or combinations thereof. In an embodiment, circuitry includes hardware circuit implementations (e.g., implementations in analog circuitry, implementations in digital circuitry, and the like, and combinations thereof).

In an embodiment, circuitry includes combinations of circuits and computer program products having software or firmware instructions stored on one or more computer readable memories that work together to cause a device to perform one or more protocols, methodologies or technologies described herein. In an embodiment, circuitry includes circuits, such as, for example, microprocessors or portions of microprocessor, that require software, firmware, and the like for operation. In an embodiment, circuitry includes one or more processors or portions thereof and accompanying software, firmware, hardware, and the like.

The present application may reference quantities and numbers. Unless specifically stated, such quantities and numbers are not to be considered restrictive, but exemplary of the possible quantities or numbers associated with the present application. Also in this regard, the present application may use the term "plurality" to reference a quantity or number. In this regard, the term "plurality" is meant to be any number that is more than one, for example, two, three, four, five, etc. The terms "about", "approximately", "near" etc., mean plus or minus 5% of the stated value.

## Claims

1. An extended reality, XR, streaming method of streaming XR images from an XR application instance to an XR device (12), wherein the XR application instance (26) is integrated into a computer device (14) that is provided separately from the XR device (12), wherein the XR streaming method comprises the steps of
- rendering, by the XR application instance (26), an XR image to be displayed on the XR device (12) with respect to a predetermined reference position, wherein the predetermined reference position has a predetermined relation to a momentary position of the XR device (12);
- streaming, by the XR application instance (26), the rendered XR image to the XR device (12); and
- reprojecting, by the XR device (12), the rendered XR image to a first eye position and/or reprojecting, by the XR device (12), the rendered XR image to a second eye position, such that a first XR image for the first eye and a second XR image for the second eye are obtained based on the rendered XR image;
wherein the predetermined reference position is different from the first eye position and different from the second eye position, wherein the XR streaming method further comprises the steps of
- rendering, by the XR application instance (26), the XR image to be displayed for the first eye position, thereby obtaining a first comparison XR image;
- rendering, by the XR application instance (26), the XR image to be displayed for the second eye position, thereby obtaining a second comparison XR image;
- reprojecting, by the XR application instance (26), the rendered XR image to the first eye position, thereby obtaining a first reprojected XR image;
- reprojecting, by the XR application instance (26), the rendered XR image to the second eye position, thereby obtaining a second reprojected XR image;
- comparing, by the XR application instance (26), the first reprojected XR image with the first comparison XR image, thereby obtaining first difference data;
- comparing, by the XR application instance (26), the second reprojected XR image with the second comparison XR image, thereby obtaining second difference data; and
- transmitting, by the XR application instance (26), the difference data to the XR device (12).

2. The XR streaming method of claim 1, wherein the first XR image for the first eye obtained by the XR device (12) is corrected by the XR device (12) based on the first difference data, and/or wherein the second XR image for the second eye obtained by the XR device (12) is corrected by the XR device (12) based on the second difference data.

3. The XR streaming method of claim 1 or 2, wherein the first difference data is encoded by the XR application instance (26) before transmission to the XR device (12), and/or wherein the second difference data is encoded by the XR application instance (26) before transmission to the XR device (12).

4. The XR streaming method according to any one of the preceding claims, wherein the XR application instance (26) and the XR device (12) employ the same reprojection algorithm.

5. The XR streaming method according to any one of the preceding claims, wherein the XR application instance (26) and the XR device (12) employ the same machine-learning model trained to perform the reprojection.

6. The XR streaming method according to any one of the preceding claims, wherein the rendered XR image is reprojected based on an updated position of the XR device (12).

7. An XR projection system, wherein the XR projection system (10) comprises an XR device (12) and an XR application instance (26), wherein the XR application instance (26) is integrated into a computer device (14) that is provided separately from the XR device (12), and wherein the XR projection system (10) is configured to perform the XR streaming method according to any one of the preceding claims.

8. The XR projection system of claim 7, wherein the computer device (14) is or comprises at least one server.
